## Europäisches Patentamt

## European Patent Office

## Office européen des brevets

(11) Veröffentlichungsnummer: **0 216 233**
**B1**

(12) # EUROPÄISCHE PATENTSCHRIFT

(45) Veröffentlichungstag der Patentschrift:
**23.11.88**

(51) Int. Cl.⁴: **F 16 B 13/10**

(21) Anmeldenummer: **86112365.1**

(22) Anmeldetag: **06.09.86**

(54) **Spreizdübel.**

(30) Priorität: **18.09.85 DE 3533220**

(43) Veröffentlichungstag der Anmeldung:
**01.04.87 Patentblatt 87/14**

(45) Bekanntmachung des Hinweises auf die Patenterteilung:
**23.11.88 Patentblatt 88/47**

(84) Benannte Vertragsstaaten:
**CH DE FR GB IT LI SE**

(56) Entgegenhaltungen:
**CH-A-554 498**
**CH-A-644 190**
**CH-A-645 168**
**DE-A-2 205 624**
**DE-A-3 303 602**

(73) Patentinhaber: **Impex- Essen Vertrieb von Werkzeugen GmbH, Dürrnerstrasse 1 Postfach 1463, D-8800 Ansbach (DE)**

(72) Erfinder: **Mack, Karl, Am Hang 18, D-8800 Ansbach (DE)**
Erfinder: **Schmidt, Werner, Dollmannstrasse 112, D-8800 Ansbach (DE)**

(74) Vertreter: **Sturies, Herbert, Patentanwälte Dr. Ing. Dipl. Phys. Herbert Sturies Dipl. Ing. Peter Eichler Brahmsstrasse 29, Postfach 20 12 42, D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen in ein vorgeformtes Loch von hartem Aufnahmematerial, insbesondere Beton, einsetzbaren Spreizdübel, der aus einer metallischen Dübelhülse, die an ihrem in Setzrichtung vorn gelegenen Spreizbereich mit Längsschlitzen und radial vorstehenden Haltevorsprüngen versehen ist, und einem in den Spreizbereich der Dübelhülse einzutreibenden Spreizkörper besteht.

Bei bekannten Spreizdübeln obiger Art, z. B. nach der DE-OS-2 205 624 oder dem DE-GM-6 930 827, ist die Dübelhülse in ihrem Spreizbereich außen zylindrisch gestaltet und mit zahlreichen dicht hintereinander liegenden Haftrillen oder auch widerhakenartig profilierten Zahnrippen versehen, während sie innen entweder konisch oder stufenartig verengt verläuft, so daß sie beim Eintreiten des im wesentlichen zylindrisch gestalteten Spreizkörpers aufspreizt, wodurch sich die Haftrillen bzw. Zahnrippen fest gegen die Lochwandung anlegen. Durch die Haftrillen bzw. Zahnrippen soll es dabei nicht nur zu einem Reibsondern auch Formschluß zwischen der Dübelhülse und dem sie umgebenden Baumaterial kommen. Durch das breitflächige Nebeneinanderliegen der Haftrillen bzw. Zahnrippen auf der zylindrischen Umfangsfläche des Hülsenspreizbereichs können aber bei hinreichend hartem Baumaterial, insbesondere Beton, die Haftrillen oder Zahnrippen nicht nennenswert in das Aufnahmematerial eindringen, so daß es dabei im wesentlichen immer nur zu einem entsprechenden Reibschluß zwischen Dübelhülse und Aufnahmematerial kommt, der gewünschte Formschluß also nicht entsteht. Diese Spreizdübel besitzen daher nur eine vergleichsweise beschränkte Haft- bzw. Ausreißfestigkeit. Ein weiterer Nachteil der bekannten Spreizdübel besteht darin, daß diese am Bohrlochgrund aufsitzen müssen, um für den mit hohem Kraftaufwand durchzuführenden Spreizvorgang ein entsprechendes Gegenlager zu erhalten. Hierbei kann jedoch Bohrmehl in das Dübelinnere gelangen, wodurch der Spreizvorgang oftmals zusätzlich erschwert wird bzw. nicht vollständig ausgeführt werden kann. Diese Art der Montage bedingt zudem die Einhaltung einer genauen Bohrlochtiefe, wozu oftmals teure Sonderwerkzeuge, wie z. B. Bundbohrer, eingesetzt werden.

Der Erfindung liegt daher die Aufgabe zugrunde, einen Spreizdübel der eingangs erwähnten Gattung dahingehend zu verbessern und zu vervollkommnen, daß er unter Beibehalt seiner vergleichsweise einfachen Beschaffenheit auch in hartem Aufnahmematerial, insbesondere Beton, wesentlich besser, und zwar mit deutlich geringerem Montagekraftaufwand tatsächlich formschlüssig verankert werden kann, um hohe Auszugswerte zu erzielen. Der Spreizvorgang zur Verankerung soll dabei in jeder beliebigen Tiefenlage des Dübels im Bohrloch erfolgen können, ohne daß hierzu eine Abstützung zum Bohrlochgrund erforderlich ist. Diese Aufgabe wird bei einem gattungsgemäßen Spreizdübel dadurch gelöst, daß seine Dübelhülse in ihrem Spreizbereich doppelkonusartig verengt und an der engsten Stelle dieser Verengung mit mindestens einer, die Haltevorsprünge bildenden, umlaufenden, gehärteten Ringschneide versehen ist. Auf diese Weise kommt man zu einem Spreizdübel, dessen im verengten Spreizbereich der Dübelhülse liegende Ringschneide aufgrund der beidseitig von ihr gelegenen konischen Freiräume sich beim durch den einzutreibenden Spreizkörper erfolgenden Aufspreizen ungehindert radial in das die Lochwandung umgebende Aufnahmematerial einschneiden kann, so daß es hier zu einer entsprechenden Hinterschneidung des Aufnahmelochs bzw. der Aufnahmebohrung kommt, die eine entsprechend starke formschlüssige Verbindung zwischen der Dübelhülse und dem Aufnahmematerial bringt.

Vorteilhaft besitzt die Dübelhülse in ihrem Spreizbereich wie auch in ihrem übrigen, zylindrisch gestalteten Schaftbereich eine durchgehend gleiche Wandstärke, wobei die umlaufende Schneidkante der Ringschneide, bedingt durch die doppelkonusartige Verengung, ein Polygon bildet, dessen kleinerer Durchmesser innerhalb des zylindrischen Schaftprofils der Hülse liegt und dessen größter Durchmesser geringfügig darüber hinausragt. Mit anderen Worten liegt die Mitte der Ringschneide auf den einzelnen Spreizsegmenten innerhalb des zylindrischen Schaftprofils der Hülse, während sich die Polygonecken bereits beim Einsetzen des Dübels in das Bohrloch so in dem Aufnahmematerial verkrallen, daß der leichtgängige Spreizvorgang zur Verankerung an jeder beliebigen Stelle im Bohrloch erfolgen kann, ohne daß dabei eine axiale Verschiebung des Dübelelements auftritt. Eine Abstützung zum Bohrlochgrund ist somit nicht erforderlich.

Wie die Erfahrung gezeigt hat, ist es von Vorteil, wenn die Dübelhülse an ihrem vorderen, nicht verengten Stirnende einen ringsum geschlossen verlaufenden Stützrand aufweist. Dadurch wird sichergestellt, daß sich das vordere Stirnende beim Aufspreizen des Ringschneidenbereichs der Hülse nicht etwa zusammendrückt und damit zu einem entsprechenden Schiefstellen der Ringschneide führt, was die Verankerungsfestigkeit des Spreizdübels beeinträchtigen würde. Vielmehr wird durch den ringsum geschlossenen Stützrand sichergestellt, daß die Ringschneide beim Eintreiben des Spreizkörpers radial nach außen gepreßt und damit in das Aufnahmematerial eingeschnitten wird. Der vorerwähnte geschlossene Stützrand kann einfach dadurch erreicht werden, daß die im Spreizbereich der Dübelhülse vorhandenen Längsschlitze vor deren vorderem Stirnende enden. Vordeilhafter ist es aber noch, wenn dafür in das vordere Stirnende der Dübelhülse eine den Stützrand bildende Abdeckecheibe oder -kappe eingesetzt ist, da diese zugleich den Vorteil bringt, daß sie das Eindringen von in der Aufnahmebohrung etwa vorhandenem Bohrmehl, Abrieb od.dgl. in den Spreizhereich der Dübelhülse verhindert, was andernfalls dazu führen könnte, daß der Spreizkörper nicht weit genug in den Spreizbereich der Hülse eingetrieben werden könnte. Für den erfindungsgemäßen Spreizdübel ist nämlich das wegkontrollierte Eintreiben des Spreizkörpers wesentlich, weil nur durch einen entsprechend abgestützten Spreizkörper die Ringschneide ordnungsgemäß in das Aufnahmematerial einschneiden und damit den angestrebten formschlüssigen Hinterschnitt erzielen kann. Dieser Formschluß macht die Verankerung unempfindlich gegenüber Umgebungseinflüssen, wie z. B. Rissen, Vibrationen u. dgl. Der Spreizvorgang erfolgt dabei auch mit wesentlich geringerem Kraftaufwand als bei den bekannten Dübeln, da nur das relativ kleine Volumen der Ringschneide in das Aufnahmematerial eingeformt wird. Bei Einsatz von Werkstoffen mit geeigneter Festigkeit bzw. von vergüteten Werkstoffen ist die formschlüssige Verankerung der Dübelhülse auch in Betonzuschlägen, wie z. B. Kieselsteinen, sowie in anderem hartem Gestein durchaus gewährleistet.

In der Zeichnung sind mehrere Ausführungsbeispiele erfindungsgemäß beschaffener Spreizdübel dargestellt. Dabei zeigen

Fig. 1 die bevorzugte Ausführungsform einer mit einem doppelkonusartig verengten Spreizteil und einer Ringschneide versehenen Dübelhülse in der Draufsicht,

Fig. 1a einen Schnitt nach der Linie a-a der Fig. 1,

Fig. 2 einen Schnitt durch den Spreizdübel im montierten Zustand zusammen mit einem daran schraubbefestigten Gegenstand,

Fig. 3 eine Dübelhülse mit zwei in ihrer doppelkonusartigen Verengung gelegenen Ringschneiden,

Fig. 4 eine mit einer Ringschneide und mit Außengewinde versehene Dübelhülse mit einzutreibendem Spreizstift und

Fig. 5 eine weitere Ausführungsform des Spreizdübels.

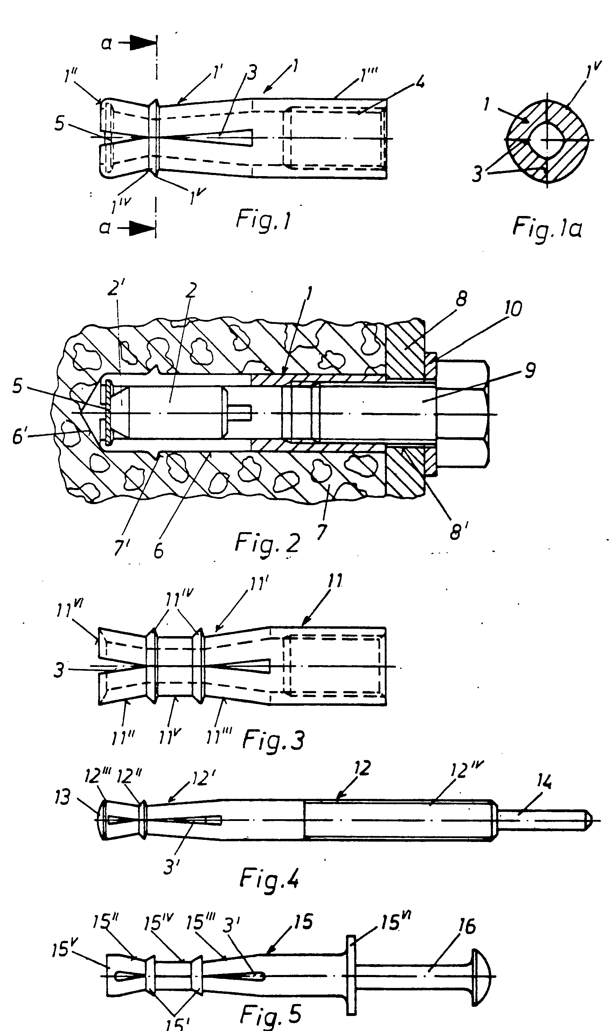

Der in den Fig. 1 und 2 dargestellte Sprelzdübel besteht im wesentlichen aus der Dübelhülse 1 und dem in deren Spreizbereich 1' in Setzrichung einzutreibenden Spreizkörper 2.

Die Dübelhülse 1 besteht aus Metall, insbesondere gehärtetem Stahl. Sie ist in ihrem Spreizbereich 1' mit Längsschlitzen 3 versehen, die zum in Setzrichtung vorn liegenden Strinende 1'' auslaufen. Während die Hülse 1 in ihrem rückwärtigem Schaftbereich 1''' zylindrisch gestaltet und mit einem Befestigungs-Innengewinde 4 versehen ist, weist sie in ihrem Spreizbereich 1' eine doppelkonusartige Verengung auf, an deren engster Stelle eine umlaufende Ringschneide 1$^{IV}$ vorhanden ist. Deren allein durch die Längsschlitze 3 unterteilte umlaufende Schneidkante 1$^V$ liegt in der Mitte der Spreizsegmemte innerhalb des Profils des zylindrischen Schaftbereichs 1''' der Hülse, während ihre Ecken geringfügig über ihren Durchmesser hinausragen. Sowohl in ihrem doppelkonischen Spreizbereich 1' als auch in ihrem zylindrischen Schaftbereich 1''' besitzt die Dübelhülse 1 eine durchgehend gleiche Wandstärke. In das vordere, nicht verengte Stirnenden 1'' der Dübelhülse 1 ist eine Abdeckscheibe 5 eingesetzt, die das vordere Strinende 1'' der Hülse nicht nur verschließt, sondern es auch umfangsrandmäßig abstützt, damit es beim Eintreiben des Spreizkeils 2 nicht zusammengedrückt werden kann.

Zur Montage des neuen Spreizdübels wird in das mit glatt durchlaufender Wandung versehene, entsprechend vorgeformte Bohrloch 6 im Aufnahmematerial 7, insbesondere Beton, zunächst die Dübelhülse 1 in ihrem in Fig. 1 dargestellten Ausgangszustand bis zur erforderlichen Tiefe, gegebenenfalls bis zum Anschlag am Lochboden 6' eingeschoben, wobei durch die Abdeckscheibe 5 das Eindringen von etwa im Bohrloch 6 vorhandenem Bohrmehl u. dgl.
Abriebmaterial in das Innere der Dübelhülse verhindert wird. Sodann wird der mit seiner konischen Stirnfläche 2' nach vorn in die Dübelhülse 1 eingelegte zylindrische Spreizkörper 2, dessen Ausendurchmesser dem Innendurchmesser der Dübelhülse 1 in ihrem zylindruschen Schaftbereich 1''' entspricht, in den Spreizbereich 1' der Hülse mittels eines entsprechenden Eintreibwerkzeuges eingetrieben bzw. eingeschlagen. Dadurch kommt es zu einem Aufspreizen des Hülsen-Spreizbereichs mit entsprechend radialem Auseindertreten der Ringschneide 1$^{IV}$, die sich dabei in das Aufnahmematerial 7 vergleichsweise tief einschneidet und dadurch an dieser Stelle 7' eine formschlüssige Hinterschneidung bildet, die eine entsprechend hohe Ausreiß- bzw. Haftfestigkeit gewährleistet. Sodann kann an der so fest im Aufnahmematerial 7 verankerten. Dübelhülse 1 der zu Befestigende Gegenstand 8 angebracht werden, und zwar mittels der ein entsprechendes Schraubloch 8' im Gegenstand 8 durchsetzenden, in das befestigungs-Innengewinde 4 der Dübelhülse 1 einzudrehenden Schraube 9, wobei zwischen dem Schraubenkopf und dem zu befestigenden Gegenstand 8 vorteilhaft noch eine Unterlegscheibe 10 angebracht wird. Wie die Fig. 2 zeigt, liegt der Spreizkörper 2 in der ordnungsgemäßen Montagestellung des Spreizdübels vorn an der Abdeckscheibe 5 an. Dadurch ist ein wegkontrolliertes Eintreiben des Spreizkörpers 2 gewährleistet und damit auch sichergestellt, daß der Spreizkörper 2 stets mit seinem größtem Durchmesser im Bereich der Ringschneide 1$^{IV}$ zu liegen kommt, die sich dadurch beim Aufspreizen in der gewünschten Weise tief in das Aufnahmematerial 7 einschneiden kann.

Die in Fig. 3 dergestellte Dübelhülse 11 unterscheidet sich von der vorbeschriebenen im wesentlichen dadurch, daß sie in ihrem doppelkonisch verengten Spreizbereich 11' mit zwei zwischen dessen beiden Konusflächen 11", 11''' gelegenen Ringschneiden 11$^{IV}$ versehen ist, zwischen denen der im Durchmesser kleinste zylindrische Mittelabschnitt 11$^V$ liegt. Weiterhin ist hier das von den nach vorn auslaufenden Längsschlitzen 3 durchsetzte Stirnende 11$^{VI}$ der Dübelhülse randseitig nicht abgestützt. Das hierdurch beim Einsetzen der Dübelhülse 11 in das Bohrloch und durch das Eintreiben des Spreizkörpers möglicherweise zustandekommende Zusamnendrücken des vorderen Stirnendes 11$^{VI}$ ist hier für die angestrebte formschlüesige Hinterschneidung des Dübelsitzes im Aufnahmewerkstoff deswegen weniger schädlich, weil es dabei allenfalls vorübergehend zu einer geringförmigen Schiefstellung der in Setzrichtung vorn gelegenen Ringschneide kommen kann, die nämlich dann, wenn der Spreizkonus 2 mit seinem größten Durchmesser auch diesen vorderen Ringschneidenbereich voll durchdringt, wieder korrigiert wird. Beide Ringschneiden 11$^{IV}$ können daher auch hier radial in das Aufnahmematerial einschneiden.

Die in Fig. 4 dargestellte Dübelhülse 12 ist in ihrem vorderen Spreizbereich 12' wiederung mit einer doppelkonusartigen Verengung und einer an deren engster Stelle gelegenen Ringschneide 12" versehen, wobei aber die Längsschlitze 3' schon vor dem vorderen stirnende 12''' der Dübelhülse enden. Die hier zum Verschluß des vorderen Stirnendes 12''' eingesetzte Abdeckkappe 13 kann daher aus beliebigem Material, insbesondere auch aus Plastikmaterial bestehen. Der in die Dübelhülse 12 einzutreibende Spreizkörper ragt hier rückseitig aus der im zylindrischen Schaftbereich mit einem Befestigungs-Außengewinde 12 versehenen Dübelhülse 12 heraus und ist als Spreizstift 14 ausgebildet.

Im Fall der Fig. 5 besitzt die Dübelhülse 15 ähnlich wie beim Beispiel der Fig. 3 zwei Ringschneiden 15', die beidseitig von den Konusflächen 15", 15''' flankiert werden und zwischen sich den engen zylindrischen Mittelabschnitt 15$^{IV}$ einschließen. Wie im Falle der Fig. 4 laufen auch hier die Längsschlitze 3' nicht nach vorn aus, so daß das vordere Stirnende 15$^V$ einen ringsum geschlossen verlaufenden Stützrand bildet. An ihrem rückwärtigen Ende ist die Hülse 15 mit einem flanschartig sich erweiternden Anschlagkopf 15$^{VI}$ versehen. Der in die Dübelhülse 15 einzutreibende Spreizkörper ist hier als entsprechend lang bemessener, rückwärtig aus der Hülse herausragender Spreiznagel 16 ausgebildet. Während in den vorbeschriebenen Fällen die Dübelhülse vorteilhaft aus entsprechend bearbeitetem Rohr- oder Vollmaterial besteht, kann hier die Dübelhülse 15 auch als Blechbiegeteil ausgebildet sein, wobei die Ringschneiden 15' entweder am Hülsenkörper angeformt oder aber als separate Teile angebracht sind.

Die Dübelhülse mit ihrer doppelkonusartigen Verengung und der Ringschneide kann auf die verschiedenartigste Weise hergestellt werden. Vorteilhaft wird dabei zunächst die Ringschneide durch Kalt- oder Warmverformung des entsprechenden Ausgangswerkstoffes angeformt und nach dem Bohren und Längsschlitzen die doppelkonusartige Verengung eingedrückt. Die Ringschneide kann aber auch durch Drehen hergestellt werden, wobei formt und nach dem Bohren und Längsschlitzen die doppelkonusartige Verengung eingedrückt. Die Ringschneide kann aber auch durch Drehen hergestellt werden, wobei der Werkstoff-Ausgangsdurchmesser dem späteren Hülsen-Durchmesser zusätzlich der doppelten Ringschneidenhöhe entspricht, woraufhin nach dem Bohren und Schlitzen wiederum die doppelkonusartige Verengung eingedrückt wird. Weiterhin kann aber auch die einsatzfertige Form durch Drehen und Bohren hergestellt werden, wobei die Bohrungen dann ebenfalls doppelkonusförmig ausgeführt werden. Dabei erfolgt nach dem Längsschlitzen kein Eindrücken des Materials. Wie schon erwähnt kann die Dübelhülse aber auch als Blechbiegeteil hergestellt werden, wobei die Hülse entweder einsatzfertig vom Werkzeug fällt oder nachträglich Ringschneiden in vorgeprägte Aufnahmekammern eingesetzt werden.

**Patentansprüche**

1. In ein vorgeformtes Loch von hartem Aufnahmematerial, insbesondere Beton, einsetzbarer Spreizdübel, bestehend aus einer metallischen Dübelhülse, die an ihrem in Setzrichtung vorn gelegenen Spreizbereich mit Längsschlitzen und radial vorstehenden Haltevorsprüngen versehen ist, und einem in den Spreizbereich der Dübelhülse einzutreibenden Spreizkörper, dadurch gekennzeichnet, daß die Dübelhülse (1, 11, 12, 15) in ihrem Spreizbereich (1', 11', 12') doppelkonusartig verengt und an der engsten Stelle dieser Verengung mit mindestens einer die Haltevorsprünge bildenden, umlaufenden, gehärteten Ringschneide (1$^{IV}$, 11$^{IV}$, 12", 15') versehen ist.

2. Spreizdübel nach Anspruch 1, dadurch gekennzeichnet, daß die Dübelhülse (1) in ihrem Spreizbereich ( 1') wie auch in ihrem übrigen, zylindrisch gestalteten Schaftbereich (1''') eine durchgehend gleiche Wandstärke besitzt und die umlaufende, nur von den Längsschlitzen (3, 3') unterteilte Schneidkante (1$^V$) der Ringschneide (1$^{IV}$) ein Polygon bildet, dessen kleinerer Durchmesser innerhalb des zylindrischen Schaftprofils der Hülse liegt und dessen größter Durchmesser geringfügig darüber hinausragt.

3. Spreizdübel nach Anspruch 2, <u>dadurch gekennzeichnet,</u> daß die Dübelhülse (1) an ihrem vorderen Stirnende (1'') einen ringsum geschlossen verlaufenden Stützrand (5) aufweist.

4. Spreizdübel nach Anspruch 3, <u>dadurch gekennzeichnet,</u> daß in das vordere Stirnende (1'' bzw. 12''') der Dübelhülse (1 bzw. 12) eine den Stützrand bildende Abdeckscheibe (5) oder -kappe (13) eingesetzt ist.

5. Spreizdübel nach Anspruch 3, <u>dadurch gekennzeichnet,</u> daß die im Spreizbereich der Dübelhülse (12 bzw. 15) vorhandenen Längsschlitze (3') vor deren vorderem Stirnende (12''' bzw. 15$^V$) enden.

6. Spreizdübel nach einem der Ansprüche 1 bis 5, <u>dadurch gekennzeichnet,</u> daß die Dübelhülse (11) in ihrem Spreizbereich (11') zwischen dessen beiden Konusflächen (11'', 11''') zwei Ringschneiden (11$^{IV}$) mit einem zwischen letzteren liegenden, engen zylindrischen Mittelabschnitt (11$^V$) aufweist.

7. Spreizdübel nach einem der Ansprüche 1 bis 6, <u>dadurch gekennzeichnet,</u> daß der Spreizkörper (2) mit einer konischen Stirnfläche (2') versehen, im übrigen aber zylindrisch gestaltet ist und einen dem Innendurchmesser des zylindrischen Schaftbereichs (1''') der Dübelhülse (1) entsprechenden Außendurchmesser besitzt.

6. Spreizdübel nach Anspruch 7, <u>dadurch gekennzeichnet,</u> daß der Spreizkörper (2) axial kürzer als die Längsschlitze (3) ist und die Dübelhülse (1) in ihrem zylindrischen Schaftbereich (1''') mit einem Befestigungs-Innengewinde (4) versehen ist.

9. Spreizdübel nach Anspruch 7, <u>dadurch gekennzeichnet,</u> daß der Spreizkörper als aus der Dübelhülse (12) rückwärtig herausragender Spreizstift (14) ausgebildet und die Dübelhülse (12) in ihrem zylindrischen Schaftbereich mit einem Befestigungs-Außengewinde (12$^{IV}$) versehen ist.

10. Spreizdübel nach Anspruch 7, <u>dadurch gekennzeichnet,</u> daß der Spreizkörper als aus der Dübelhülse (15) rückwärtig herausragender Spreiznagel (16) ausgebildet und die Dübelhülse (15) an ihrem rückwärtigen Ende mit einem flanschartig vorspringenden Kopf (15$^{VI}$) versehen ist.

## Claims

1. Expansion plug insertable into a preformed hole in hard receiving material, particularly concrete, comprising a metallic plug sleeve which is provided at its expansion zone at the forward end of the plug in the direction of insertion with longitudinal slots and with radially extending retaining projection means, and a spreader to be driven into the expansion zone of the plug sleeve, characterised in that the plug sleeve (1, 11, 12, 15) has a double-cone constriction in its expansion zone (1',11', 12') and is provided at the narrowest part of this constriction with at least one circumferential hardened cutting ring (1$^{IV}$, 11$^{IV}$, 12'',15') which forms said retaining projection means.

2. Expansion plug according to claim 1, characterised in that the plug sleeve (1) has a generally constant wall thickness in its expansion zone (1') and also over the remaining cylindrical shank portion (1'''), and the circumferential cutting edge (1$^V$) of the cutting ring (1$^{IV}$), broken only by the longitudinal slots (3, 3'), has the shape of a polygon whose minimum diameter lies within the cylindrical shank profile of the sleeve and whose maximum diameter projects slightly beyond that profile.

3. Expansion plug according to claim 2, characterised in that the plug sleeve (1) has at its forward end (1'') a supporting rim (5) which extends around a full circle.

4. Expansion plug according to claim 3, characterised in that a closure disc (5) or closure cap (13) forming the supporting rim is provided at the forward end (1'' and 12''') of the plug sleeve (1 and 12).

5. Expansion plug according to claim 3, characterised in that the longitudinal slots (3') provided in the expansion zone of the plug sleeve (12 and 15) terminate short of the forward end (12''' and 15$^V$) of the sleeve.

6. Expansion plug according to one of claims 1 to 5, characterised in that the plug sleeve (11) in its expansion zone (11') between its two conical faces (11'', 11''') has two cutting rings (11$^{IV}$) with a narrow cylindrical central section (11$^V$) between said rings.

7. Expansion plug according to one of claims 1 to 6, characterised in that the spreader (2) has a tapering forward end face (2') and is otherwise cylindrical, and has an external diameter corresponding to the internal diameter of the cylindrical shank portion (1''') of the plug sleeve (1).

8. Expansion plug according to claim 7, characterised in that the spreader (2) is axially shorter than the longitudinal slots (3) and the plug sleeve (1) is provided with an internal fixing thread (4) in its cylindrical shank portion (1''').

9. Expansion plug according to claim 7, characterised in that the spreader is formed as a pin (14) projecting rearwardly from the plug sleeve (12), and the plug sleeve (12) is provided with an external fixing thread (12$^{IV}$) on its cylindrical shank portion.

10. Expansion plug according to claim 7, characterised in that the spreader is formed as a nail (16) projecting rearwardly from the plug sleeve (15), and the plug sleeve (15) is provided at its rearward end with a flange-type projecting head (15$^{VI}$).

**Revendications**

1. Cheville à expansion susceptible d'être insérée dans un trou préformé dans un matériau de réception dur, notamment du béton, constituée par une douille de cheville en métal, laquelle est pourvue dans la zone expansible, située à l'avant dans le sens de l'insertion, de fentes longitudinales et de saillies d'arrêt s'avançant radialement, et par un élément d'écartement à enfoncer dans la zone expansible de la douille de cheville, caractérisée en ce que la douille de cheville (1, 11, 12, 15) se rétrécit dans sa zone expansible (1', 11', 12') pour prendre la forme d'un double cône et est pourvue, à l'endroit le plus étroit de ce rétrécissement, d'"au moins un tranchant annulaire trempé (1$^{IV}$, 11$^{IV}$, 12'', 15') qui l'entourne en constituant les saillies d'arrêt.

2. Cheville à expansion selon la revendication 1, caractérisé en ce que la douille de cheville (1) possède, dans sa zone expansible (1'), de même que dans sa partie de tige restante (1''') de forme cylindrique une même épaisseur de paroi en tous endroits, et l'arête (1$^V$) formant le pourtour du tranchant annulaire (1$^{IV}$), qui n'est subdivisée que par les fentes longitudinales (3, 3'), constitue un polygone dont le plus petit diamètre se trouve à l'intérieur du profil de tige cylindrique de la douille et dont le plus grand diamètre fait légèrement saillie au-déla de celui-ci.

3. Cheville à expansion selon la revendication 2, caractérisé en ce que la douille de cheville (1) présente, à son extrémité frontale antérieure (1''), un bord d'appui fermé s'étendant sur tout le pourtour de cette dernière.

4. Cheville à expansion selon la revendication 3, caractérisée en ce qu'une rondelle (5) ou un chapeau de recouvrement (13) définissant le bord d'appui, est encastré dans l'"extrémité frontale antérieure (1'' ou 12''') de la douille de cheville (1 ou 12).

5. Cheville à expansion selon la revendication 3, caractérisé en ce que les fentes longitudinales (3') aménagées dans la zone expansible de la douille de cheville (12 ou 15) prennent fin avant l'extrémité frontale antérieure (12''' ou 15$^V$) de cette dernière.

6. Cheville à expansion selon l'une des revendications 1 à 5, caractérisée en ce que la douille de cheville (11) présente dans sa zone expansible (11'), entre ses deux surfaces coniques (11'', 1'''), deux tranchants annulaires (11$^{IV}$) avec un tronçon médian cylindrique (11$^V$) étroit situé entre ces dernières.

7. Cheville à expansion selon l'une des revendications 1 à 6, caractérisée en ce que l'élément d'écartement (2) est pourvu d'une surface frontale conique (2'), en ayant pour le reste une forme cylindrique, et possède un diamètre extérieur correspondant au diamètre inférieur de la partie de tige cylindrique (1''') de la douille de cheville (1).

8. Cheville à expansion selon la revendication 7, caractérisée en ce que l'élément d'écartement (2) est plus court axialement que les fentes longitudinales (3) et la douille de cheville (1) est pourvue, dans sa partie de tige cylindrique (1'''), d'un filetage intérieur de fixation (4).

9. Cheville à expansion selon la revendication 7, caractérisée en ce que l'élément d'écartement est constitué par une tige d'écartement (14) faisant saillie à l'arrière hors de la douille de cheville (12) et la douille de cheville (12) est pourvue, dans sa partie de tige cylindrique, d'un filetage extérieur de fixation (12$^{IV}$).

10. Cheville à expansion selon la revendication 7, caractérisée en ce que l'élément d'écartement est constitué par un clou d'écartement (16) faisant saillie à l'arrière hors de la douille de cheville (15) et la douille de cheville (15) est pourvue à son extrémité arrière d'une tête (15$^{VI}$) formant une saillie en forme de collerette.

Fig. 1

Fig. 1a

Fig. 2

Fig. 3

Fig. 4

Fig. 5

1